# EUROPEAN PATENT APPLICATION

(11) **EP 4 465 627 A1**
(43) Date of publication of application: **20.11.2024**
(21) Application number: 24174800.3
(22) Date of filing: 08.05.2024
(51) Int. Cl.: H04N 19/105, H04N 19/107, H04N 19/137, H04N 19/139, H04N 19/513, H04N 19/597, G06T 9/00

(54) **ENCODING SYSTEM, POINT CLOUD ENCODING DEVICE, ENCODING METHOD, AND STORAGE MEDIUM**

(30) Priority: 16.05.2023 JP 2023081067
(71) Applicant: CANON KABUSHIKI KAISHA, Tokyo 146-8501 (JP)
(72) Inventor: YAJIMA, Hiromi, Tokyo, 146-8501 (JP)
(74) Representative: TBK

(57) **Abstract**

To perform encoding processing on an image and encoding processing on a point cloud, and to reduce an amount of calculation of the point cloud encoding processing, in an encoding system, a first encoding unit configured to encode an image; and a second encoding unit configured to encode a point cloud are provided, and the second encoding unit performs encoding processing based on information that has been used for the encoding processing in the first encoding unit, for example, the magnitude of a motion vector and the like, to reduce a calculation amount of point cloud encoding processing.

## Description

### BACKGROUND OF THE INVENTION

### Field of the Invention

The present invention relates to an encoding system, a point cloud encoding device, an encoding method, a storage medium, and the like.

### Description of the Related Art

In recent years, a sensing system on which is mounted a camera and a laser scanner, which is represented by an automatic operation vehicle, has been proposed.

In such a system, a two-dimensional image is acquired by the camera, and a three-dimensional point cloud is measured by the laser scanner.

Information acquired by various sensors is encoded by a method suitable for each sensor for data transmission. For example, an encoding method such as MPEG2 and H. 264 (H. 264 / MPEG-4 AVC) has been proposed for encoding of a two-dimensional image.

In contrast, as an encoding method of 3D data representing a three dimensional structure, for example, a point cloud, G-PCC codec description v2 is being formulated by MPEG (Moving Picture Experts Group) (Document 1: G-PCC codec description v2, ISO / IEC MPEG (JTC 1 / SC 29/WG11), N18189).

In the G-PCC, for example, the following method has been proposed as an interframe prediction method. Specifically, a method has been proposed in which, in a case in which a change in distance of a point at which a scanning position of a laser is close between frames is small, a difference in distance from a point having the same laser number of the previous frame and having an azimuth angle closest to a current azimuth angle is encoded. In this method, the encoding efficiency is high in a case in which the change in distance between points at the same position between frames is small.

Additionally, for a three dimensional point cloud measured by installing a light detection and ranging (LiDAR) and the like in a movable apparatus, a method of using a moving amount of the entire point cloud between frames has been proposed.

In this method, a moving amount (for example, a motion parameter represented by rotation, translation) of the entire point cloud between frames is estimated based on the point cloud position and orientation of one previous frame and the point cloud position and orientation of the current frame.

Then, a difference value between the position of each point in consideration of the estimated moving amount and the position of each point in the point cloud of the current frame is encoded with respect to the position of the point cloud of one previous frame. In a case in which a LiDAR is installed in a movable apparatus and the surroundings of the movable apparatus are measured, a substantially constant distance is measured between points on a plane represented by a road region, regardless of the moving amount of the movable apparatus. Accordingly, this method is high in encoding efficiency mainly for stationary objects other than the road.

However, in the conventional technology disclosed in the above-described document 1, one of the prediction modes is selected based on the results of the two prediction modes, that is, the intra-frame prediction and the interframe prediction. Additionally, in order to estimate a motion between frames, it is necessary to use, for example, an iterative closest point (ICP) algorithm, and there is a drawback in which the amount of calculation increases.

### SUMMARY OF THE INVENTION

In order to achieve the above object, the present invention provides an encoding system comprising: at least one processor or circuit configured to function as: a first encoding unit configured to encode an image; and a second encoding unit configured to encode a point cloud, wherein the second encoding unit performs encoding processing based on information that has been used for the encoding processing in the first encoding unit.

Further features of the present invention will become apparent from the following description of embodiments with reference to the attached drawings.

### BRIEF DESCRIPTION OF THE DRAWINGS

FIG. 1 is a functional block diagram showing a configuration example of an encoding system according to the first embodiment of the present invention.
FIG. 2 is a flowchart for explaining a method for determining a prediction method of a prediction method determination unit according to the first embodiment.
FIG. 3 is a functional block diagram showing a configuration example of an encoding system according to the second embodiment of the present invention.
FIG. 4 is a flowchart for explaining an estimation method of a moving amount performed by a moving amount estimation unit according to the second embodiment.

### DESCRIPTION OF THE EMBODIMENTS

Hereinafter, with reference to the accompanying drawings, favorable modes of the present invention will be described using the embodiments. In each diagram, the same reference signs are applied to the same members or elements, and duplicate description will be omitted or simplified.

### (First Embodiment)

In the first embodiment of the present invention, an example in which a camera (not illustrated) and a LiDAR (not illustrated) are fixedly installed near a building and a road will be explained. Additionally, in the first embodiment, it is assumed that position and orientation alignment between the camera and the LiDAR has been performed in advance using a technology, for example, in Document 2 (Lipu Zhou, Automatic Extrinsic Calibration of a Camera and a 3D LiDAR Using Line and Plane Correspondences, IEEE / RSJ IROS), and the correspondence relation between pixels on a camera image and points on a three dimensional space measured by the LiDAR has been acquired.

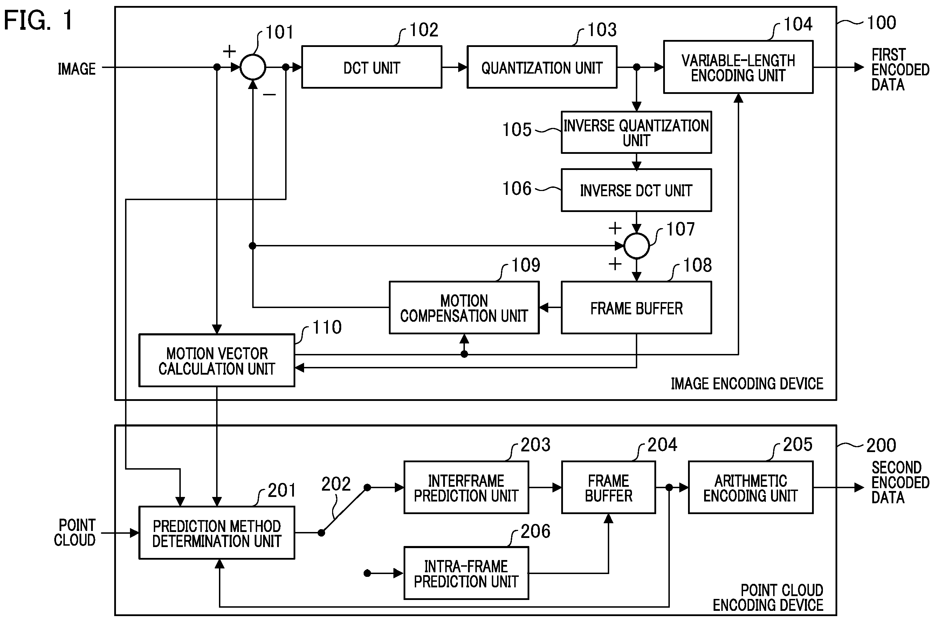

FIG. 1 is a functional block diagram showing a configuration example of an encoding system according to the first embodiment of the present invention. Note that some of the functional blocks shown in FIG. 1 are realized by causing a CPU and the like serving as a computer (not illustrated) included in the encoding system to execute a computer program stored in a memory serving as a storage media (not illustrated).

However, some or all of them may be realized in hardware. As hardware, a dedicated circuit (ASIC), a processor (reconfigurable processor, DSP) and the like can be used.

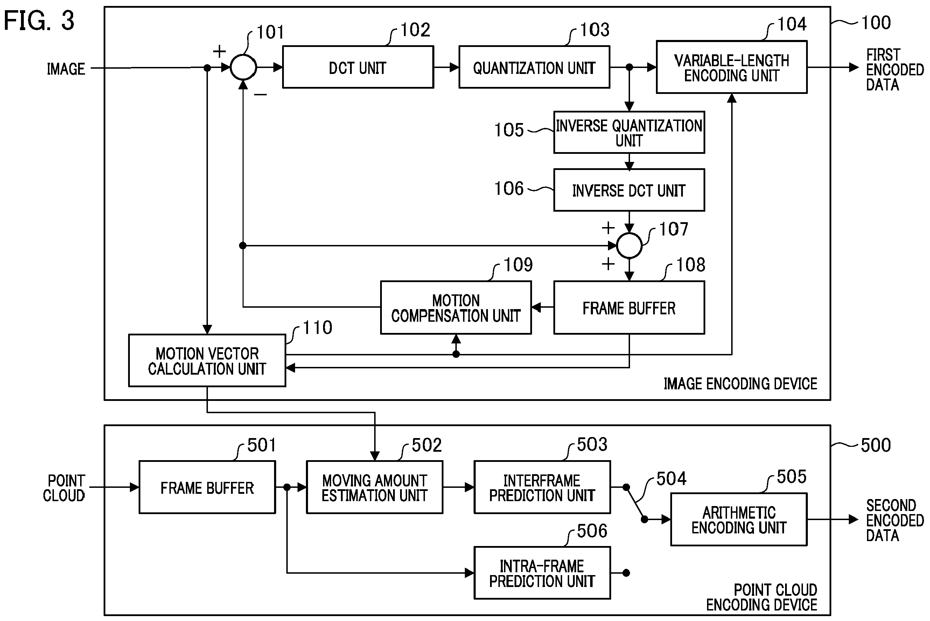

Additionally, each of the functional blocks as shown in FIG. 1 does not necessarily have to be incorporated in the same housing, and may be configured by separate devices that are connected to each other via a signal path. Note that the above explanation related to FIG. 1 also similarly applies to FIG. 3.

In FIG. 1, the encoding system includes an image encoding device 100 serving as a first encoding unit that encodes an image captured by a camera (not illustrated), and a point cloud encoding device 200 serving as a second encoding unit that encodes a point cloud acquired by a LiDAR (not illustrated). Note that it is assumed that the image encoding device 100 performs encoding in, for example, the MPEG2 format.

The image encoding device 100 has a calculation unit 101, a discrete cosine transform (DCT) unit 102, a quantization unit 103, a variable-length coding unit 104, an inverse quantization unit 105, and an inverse DCT unit 106. Additionally, the image encoding device 100 has a calculation unit 107, a frame buffer 108, a motion compensation unit 109, and a motion vector calculation unit 110. Then, the image encoding device 100 performs a first coding step in order to encode an image.

The calculation unit 101 calculates a difference value between the image information captured by the camera (not illustrated) and the prediction image information input from the motion compensation unit 109, and outputs the difference value to the DCT unit 102. Additionally, the calculation unit 101 outputs the calculated difference value between the R value of the pixel corresponding to the encoding target point and the R value of the reference pixel corresponding to the reference point to a prediction method determination unit 201 of the point cloud encoding device 200 to be described below.

The DCT unit 102 performs DCT processing on the difference value input from the calculation unit 101, and outputs the resulting DCT coefficient to the quantization unit 103.

The quantization unit 103 quantizes the DCT coefficient at a predetermined quantization step, and outputs the quantized DCT coefficient to the variable-length coding unit 104 and the inverse quantization unit 105. The variable-length coding unit 104 performs variable-length coding on the quantized DCT coefficient input from the quantization unit 103 based on the motion vector detected (calculated) by the motion vector calculation unit 110, and outputs the result as first encoded data.

The inverse quantization unit 105 performs inverse quantization on the quantized DCT coefficient according to the quantization step in the quantization unit 103, and outputs the obtained DCT coefficient to the inverse DCT unit 106. The inverse DCT unit 106 performs inverse DCT processing on the DCT coefficient, and outputs the result to the calculation unit 107.

The calculation unit 107 adds the output information from the inverse DCT unit 106 and the prediction image information from the motion compensation unit 109 to locally decode the original image information. This locally decoded image information is output to and stored in the frame buffer 108 to be used when the prediction image information is generated.

The motion vector calculation unit 110 searches for a portion similar to the current block (hereinafter, referred to as a "reference block") in a predetermined search range of a past encoded frame image (hereinafter, referred to as a "reference frame") that is stored in the frame buffer 108. Then, the motion vector calculation unit 110 detects a two-dimensional spatial moving amount from the current block to the similar portion as a motion vector.

The motion vector calculation unit 110 supplies the detected motion vector to the motion compensation unit 109 and the variable length encoding unit 104.

Additionally, the motion vector calculation unit 110 outputs the detected motion vector to the prediction method determination unit 201 of the point cloud encoding device 200 to be described below. Additionally, the motion vector calculation unit 110 outputs the R value of the pixel in the current block and the R value of the pixel in the reference block (hereinafter, referred to as a "reference pixel"), which is a reference destination of the motion vector, to the prediction method determination unit 201. Note that the R value is a signal value corresponding to red color.

The point cloud encoding device 200 includes the prediction method determination unit 201, a switch 202, an interframe prediction unit 203, a frame buffer 204, an arithmetic encoding unit 205, and an intra-frame prediction unit 206. The point cloud encoding device 200 performs a second encoding step of encoding the point cloud.

A point cloud frame acquired by a LiDAR (not illustrated) is input to the prediction method determination unit 201, and the prediction method determination unit 201 determines whether to perform intra-frame prediction or interframe prediction on each point in the point cloud frame. Here, the prediction method determination unit 201 functions as a first acquisition unit that acquires point cloud information.

The prediction method determination unit 201 performs the above-described determination based on the motion vector input from the motion vector calculation unit 110, the intensity of the encoding target point, the intensity of the reference destination point of the motion vector, the R value of the encoding target pixel, and the R value of the reference pixel.

Note that the point of the reference destination of the motion vector is hereinafter referred to as a "reference point". Here, the prediction method determination unit 201 functions as a second acquisition unit that acquires the first information used in encoding performed by the first encoding unit that encodes an image. The detailed processing procedure of the determination method will be described below.

The switch 202 functions as a selection unit for selecting which prediction mode of the intra-frame prediction or the interframe prediction is to be used, and selects the prediction mode determined by the prediction method determination unit 201.

The interframe prediction unit 203 calculates a difference in distance from a point having the same laser number of the previous frame and having an azimuth angle closest to a current azimuth angle, according to, for example, the point cloud encoding rule of the G-PCC described in the above-described document 1, and outputs the difference in distance to the frame buffer 204.

The intra-frame prediction unit 206 performs intra-frame prediction according to, for example, the point cloud encoding rule of the G-PCC, and outputs the prediction result to the frame buffer 204. The arithmetic encoding unit 205 inputs information that has been output from the interframe prediction unit 203 or the intra-frame prediction unit 206 via the frame buffer 204, performs arithmetic encoding, and outputs the encoded information as second encoded information. The arithmetic encoding unit 205 performs encoding processing on a point cloud information based on the first information.

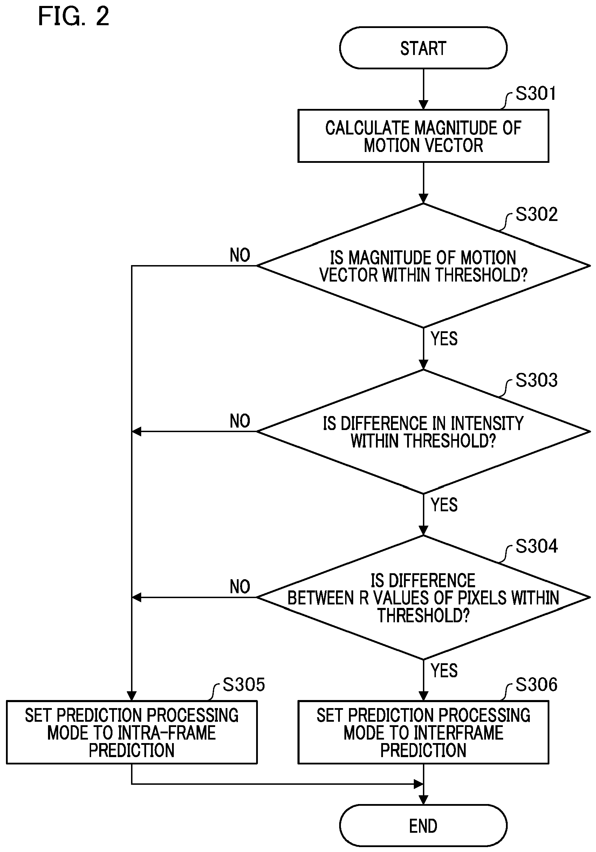

FIG. 2 is a flowchart for explaining a determination method of a prediction method performed by the prediction method determination unit 201 according to the first embodiment, and a processing procedure of the prediction method determination unit 201 will be explained with reference to the flowchart of FIG. 2.

Note that a CPU and the like serving as a computer (not illustrated) in the encoding system executes a computer program stored in a memory (not illustrated), thereby the operation of each step in the flowchart of FIG. 2 is sequentially performed.

In step S301, the prediction method determination unit 201 calculates the magnitude of the motion vector based on the information of the motion vector that has been input from the motion vector calculation unit 110. Next, in step S302, it is determined whether or not the magnitude of the motion vector is equal to or less than a predetermined threshold.

In a case in which it is determined in step S302 that the magnitude is equal to or less than the predetermined threshold, it is determined that a change in distances between the points in the point cloud corresponding to the same pixel between the frames is also minute because the movement of the pixel between the frames is minute, and the process proceeds to step S303.

In contrast, in a case in which it is determined in step S302 that the magnitude is larger than the predetermined threshold, it is understood that the movement of the pixel between the frames is large. Therefore, it is determined that a change in distances between the points in the point cloud corresponding to the same pixel between the frames is also large, and the process proceeds to step S305, where the prediction mode is set to the intra-frame prediction, and the process flow of FIG. 2 ends.

In step S303, the prediction method determination unit 201 acquires information on the intensity of the reference point corresponding to the encoding target point from the frame buffer 204, and calculates the difference between the intensity of the encoding target point and the intensity of the reference point. Here, intensity is information indicating the intensity of each of the point clouds. For example, intensity is information indicating the intensity when the light receiving unit receives light emitted by the LiDAR and reflected (scattered) by an object.

In a case in which the calculated difference is equal to or less than the predetermined threshold, it is determined that the encoding target point and the reference point are points indicating the same object, and the process proceeds to step 304. In contrast, in a case in which, in step S303, the determination result is "NO", the encoding target point and the reference point are similar to each other, but the intensities are different. Therefore, it is determined that the points are do not indicate the same object, the process proceeds to step 305, the prediction mode is set to the intra-frame prediction, and the process flow of FIG. 2 ends.

In step 304, the difference between the R value of the pixel corresponding to the encoding target point and the R value of the reference pixel corresponding to the reference point calculated by the calculation unit 101 is acquired. Then, when the difference is within a predetermined threshold, the process proceeds to step S306, the prediction process mode is set to interframe prediction, and the process flow of FIG. 2 ends.

In contrast, in a case in which, in step 304, the determination result is "NO", it is determined that the encoding target point and the reference point are not points indicating the same object because the points have wavelengths equivalent to intensity but have different R values, and the process proceeds to step 305. Then, in step S305, the prediction mode is set to the intra-frame prediction, and the processing flow of FIG. 2 ends. Note that the order of step 303 and step 304 may be changed.

Thus, the prediction method determination unit 201 acquires the motion vector output from the motion vector calculation unit 110, the information on intensity of the encoding target point and the reference point corresponding to the encoding target point, and the R values of the pixel corresponding to the encoding target point and the pixel corresponding to the reference point. Then, based on these, whether or not the distances of the same points change between frames is determined for each point.

That is, the point cloud encoding device 200 serving as the second encoding unit selects one of the interframe prediction and the intra-frame prediction based on the magnitude of the motion vector, the difference between the intensity values, and the difference between the R values of the pixel of the encoding target point and the pixel of the reference point.

Then, in a case in which it is determined that the distances indicated by the corresponding points (pixels) between the frames are changed, intra-frame prediction is performed, and in a case in which it is determined that the distances are changed, interframe prediction is performed.

Additionally, in the first embodiment, the point cloud encoding device 200 performs the point cloud encoding processing in the second encoding step based on the information used for the encoding processing in the first encoding step in the image encoding device 100.

Specifically, the point cloud encoding device 200 serving as the second encoding unit selects one of the intra-frame prediction and the interframe prediction method in advance based on the information such as the magnitude of the motion vector used in the encoding processing in the image encoding device. Therefore, it is possible to significantly reduce the amount of calculation compared to the method of the conventional art in which both the intra-frame prediction and the interframe prediction are performed and the prediction method with high encoding rate is selected.

### (Second Embodiment)

Next, the second embodiment of the present invention will be explained with reference to the drawings. In the second embodiment, a case in which a camera and a LiDAR are installed in a movable apparatus such as an automobile will be explained. Note that the movable apparatus is not limited to an automobile, and may be a ship, an aircraft, a drone, an AGV, and the like as long as it is movable.

FIG. 3 is a functional block diagram showing a configuration example of an encoding system according to the second embodiment of the present invention. It is assumed that the system configuration as shown in FIG. 3 has an image encoding device 100 that encodes an image and a point cloud encoding device 500 that encodes a point cloud, and the image encoding device 100 performs encoding in MPEG2 format.

Although the configuration of the image encoding device 100 is the same as in FIG. 1, it differs in that the output of the motion vector calculation unit 110 is supplied to a moving amount estimation unit 502, which will be described below.

The point cloud encoding device 500 has a frame buffer 501, the moving amount estimation unit 502, an interframe prediction unit 503, a switch 504, an arithmetic encoding unit 505, and an intra-frame prediction unit 506. A point cloud frame acquired by a LiDAR (not illustrated) is input to the frame buffer 501. Here, the frame buffer 501 functions as a first acquisition unit that acquires point cloud information.

The moving amount estimation unit 502 associates the encoding target point with the reference point based on the information of the motion vector that has been supplied from the motion vector calculation unit 110. Here, the moving amount estimation unit 502 functions as a second acquisition unit that acquires the first information used in encoding performed by the first encoding unit that encodes an image.

Specifically, the point cloud encoding device 500 serving as the second encoding unit determines the reference point corresponding to the encoding target point based on the motion vector that has been output from the image encoding device 100 serving as the first encoding unit. Then, the moving amount estimation unit 502 estimates the moving amount of the movable apparatus based on the positional relation (difference) between the associated points. The processing procedure of the moving amount estimation unit 502 will be described below.

The interframe prediction unit 503 performs inter-frame prediction defined by, for example, the G-PCC by using the moving amount that has been supplied from the moving amount estimation unit 502, and outputs the prediction result. Additionally, the intra-frame prediction unit 506 inputs point information, performs intra-frame prediction defined by, for example, the G-PCC, and outputs the prediction result.

The switch 504 selects whether to input the prediction result of the intra-frame prediction unit 506 to the arithmetic encoding unit or to input the prediction result of the interframe prediction unit 503 to the arithmetic encoding unit. The arithmetic encoding unit 505 performs arithmetic encoding on the prediction result supplied from the switch 504, and outputs second encoded data. The arithmetic encoding unit 505 performs encoding processing on the point cloud information based on the first information.

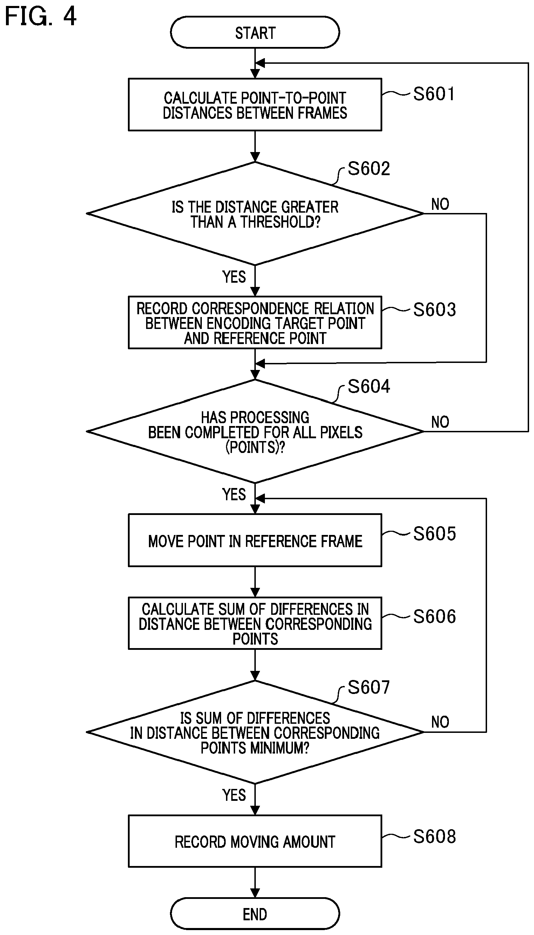

FIG. 4 is a flowchart for explaining an estimation method of a moving amount performed by the moving amount estimation unit 502 according to the second embodiment, and a processing procedure of the moving amount estimation unit 502 will be explained with reference to the flowchart of FIG. 4.

Note that a CPU and the like serving as a computer (not illustrated) in the encoding system executes a computer program stored in a memory (not illustrated), and thereby the operation of each step in the flowchart of FIG. 4 is sequentially performed.

The information on the motion vector corresponding to each point in the encoding target frame is input to the moving amount estimation unit 502 from the motion vector calculation unit 110. Additionally, the position of each point in the encoding target frame and the position of each point in the reference frame are input to the moving amount estimation unit 502 from the frame buffer 501.

Additionally, in the second embodiment, in steps S601 to S604, the correspondence relation between the encoding target point and the reference point is obtained by using points other than the road region. Additionally, in steps S605 to S607, the moving amounts of the point in the encoding target frame and the point in the reference frame are estimated based on the correspondence relation between the points other than the road region. Note that the road region here is a region such as the sea surface in a case in which the movable apparatus is a ship, and is a region such as a floor surface in a case in which the movable apparatus is an AGV and the like.

Next, processing contents of each of steps S601 to S604 will be explained. In step S601, a point-to-point distance between the encoding target point and a point measured by the laser at the same scanning position as the encoding target point in the reference frame is calculated.

Here, the point measured by the laser at the same scanning position as the encoding target point in the reference frame denotes a point having the same laser number as the encoding target point and the closest azimuth angle in the reference frame, for example, in the case of using the rotary LiDAR.

In step S602, it is determined whether or not the point-to-point distance is equal to or greater than a predetermined threshold. In a case in which, in step S602, the determination result is "YES", it is determined that the point is not on the road region (outside the road region), and the process proceeds to step S603.

That is, since a change in distances indicated by points acquired by the same laser between frames is large, it is determined that the point is not a region, for example, a road and the like. In a case in which, in step S602, the determination result is "NO", it is determined that a change in distances indicated by the points acquired by the same laser between frames is small, and thus, it is highly likely that the points are on the road region, and the process proceeds to step S604.

In step S603, a reference destination of the motion vector corresponding to the encoding target point determined to be outside the road region is set as a reference point, and a correspondence relation between the encoding target point and the reference point is recorded. Additionally, in step S604, in a case in which the process is completed in all pixels in the encoding target frame, the process proceeds to step S605, and in other cases, the process proceeds to step S601, and the processing is performed on the next point.

Next, in steps S605 to S607, the moving amount between the frames is estimated. The sum of the difference in distances between the encoding target points other than the road region and the reference points thereof (between the corresponding points) among the encoding target points is set as an objective function, and optimization calculation of estimating the moving amount between the frames in which the objective function is minimized is performed.

The processing content of each step of steps S605 to S607 will be explained. In step S605, all points in the reference frame are moved by an arbitrary moving amount (rotation and translation). In step S606, differences in distances between corresponding points recorded in step S603 are calculated, and the sum of the differences is calculated.

In step S607, it is determined whether or not the calculated sum of the differences in distance is the minimum. In a case in which the sum is the minimum, the process proceeds to step 608, and in a case in which the sum is not the minimum, the process proceeds to step S605. In step 608, the sum of the calculated differences in distance is recorded as the moving amount between the frames, and the processing flow of FIG. 4 ends. Note that the interframe prediction unit 503 performs interframe prediction processing defined in MPEG based on the moving amount between the frames calculated in step S608.

As described above, in the present embodiment, the point cloud encoding device 500 serving as the second encoding unit calculates the moving amount of the entire point cloud between the frames based on the correspondence relation of the points between the frames. Additionally, the point cloud encoding device 500 calculates the moving amount of the entire point cloud between the frames in which the difference in distance between the encoding target point and the reference point is the minimum.

Therefore, according to the second embodiment, the point cloud encoding device 500 can reduce the amount of calculation when estimating the moving amount of the point cloud between two frames.

Here, in the case of using, for example, Iterative Closest Point (ICP ) so that the movement between the frames is estimated, it is necessary to obtain the nearest point to each point in the point cloud in order to obtain the moving amount at which the positions of the two point clouds match most closely.

However, in a case in which the numbers of points in the two point clouds are respectively M and N, the amount of calculation for obtaining the nearest neighbor point is O (MlogN) in the case of using the algorithm of KbTree and the like. Furthermore, it is necessary to perform repetition processing until a convergence condition is reached, and there is a drawback in which the amount of calculation is large.

In contrast, in the second embodiment, when the moving amount of the point cloud between the two frames is estimated, the correspondence relation between the encoding target point and the reference point is acquired in advance based on the motion vector that has been output from the motion vector calculation unit 110 in the image encoding device 100. Therefore, in a case in which the ICP is used, a reduction of the calculation amount O (MlogN) for obtaining the nearest neighbor point, which is generated during the repetition processing is possible, and real-time operation using the ICP is also possible.

Although the motion between the frames is estimated by using the ICP in the above embodiments, the motion between the frames may be estimated by using a Global Positioning System (GPS ).

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the encoding system and the like through a network or various storage media. Then, a computer (or a CPU, an MPU, or the like) of the encoding system and the like may be configured to read and execute the program. In such a case, the program and the storage medium storing the program configure the present invention.

In addition, the present invention includes those realized using at least one processor or circuit configured to perform function of the embodiments explained above, for example. Dispersion processing may be performed using a plurality of processors.

This application claims the benefit of priority from Japanese Patent Application No. 2023-081067, filed on May 16, 2023, which is hereby incorporated by reference herein in its entirety.

## Claims

1. An encoding system comprising:
at least one processor or circuit configured to function as:
a first encoding unit configured to encode an image; and
a second encoding unit configured to encode a point cloud,
wherein the second encoding unit performs encoding processing based on information that has been used for the encoding processing in the first encoding unit.

2. The encoding system according to Claim 1, wherein the second encoding unit determines a reference point of an encoding target point based on a motion vector that has been output from the first encoding unit.

3. The encoding system according to Claim 1, wherein the second encoding unit selects one of interframe prediction and intra-frame prediction based on the magnitude of the motion vector that has been output from the first encoding unit.

4. The encoding system according to Claim 2, wherein the second encoding unit selects one of interframe prediction and intra-frame prediction based on a difference between intensity values of the encoding target point and the reference point.

5. The encoding system according to Claim 2, wherein the second encoding unit selects one of interframe prediction and intra-frame prediction based on a difference in R value between a pixel at the encoding target point and a pixel at the reference point.

6. The encoding system according to Claim 2, wherein the second encoding unit calculates a moving amount of the entire point cloud between frames based on a correspondence relation of points between the frames.

7. The encoding system according to Claim 6, wherein the second encoding unit calculates the moving amount of the entire point cloud between frames in which a difference in distance between the encoding target point and the reference point is minimized.

8. A point cloud encoding device comprising:
at least one processor or circuit configured to function as:
a first acquisition unit configured to acquire point cloud information;
a second acquisition unit configured to acquire first information that has been used for the encoding processing in the first encoding unit; and
a second encoding unit configured to perform encoding processing on the point cloud information based on the first information.

9. An encoding method comprising:
a first encoding in which an image is encoded; and
a second encoding in which a point cloud is encoded,
wherein, in the second encoding, encoding processing on the point cloud is performed based on information that has been used for the encoding processing in the first encoding.

10. A non-transitory computer-readable storage medium configured to store a computer program comprising instructions for executing following processes:
a first encoding in which an image is encoded; and
a second encoding in which a point cloud is encoded,
wherein, in the second encoding, encoding processing on the point cloud is performed based on information that has been used for the encoding processing in the first encoding.
